(19) Europäisches Patentamt

European Patent Office

Office européen des brevets

(11) **EP 1 648 129 A2**

(12) **EUROPEAN PATENT APPLICATION**

(43) Date of publication:
**19.04.2006 Bulletin 2006/16**

(51) Int Cl.:
*H04L 27/00* (2006.01)      *H04L 27/26* (2006.01)

(21) Application number: **05022619.0**

(22) Date of filing: **17.10.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Suh, Chang-Ho**<br>**Bundang-gu**<br>**Seongnam-si**<br>**Gyeonggi-do (KR)**<br>• **Ro, Jung-Min**<br>**Seoul (KR)**<br>• **Park, Dong-Seek**<br>**Yongin-si**<br>**Gyeonggi-do (KR)** |
| (30) Priority: **15.10.2004 KR 2004082790** | • **Cho, Young-Kwon**<br>**Youngtong-gu**<br>**Suwon-si**<br>**Gyeonggi-do (KR)** |
| (71) Applicant: **Samsung Electronics Co., Ltd.**<br>**Suwon-si, Gyeonggi-Do (KR)** | |
| (72) Inventors:<br>• **Koo, Jin-Kyu**<br>**Suwon-si,**<br>**Gyeonggi-do (KR)**<br>• **Yoon, Seok-Hyun**<br>**Seoul 110-062 (KR)** | (74) Representative: **Grünecker, Kinkeldey,**<br>**Stockmair & Schwanhäusser**<br>**Anwaltssozietät**<br>**Maximilianstrasse 58**<br>**80538 München (DE)** |

(54) **Apparatus and method for estimating uplink frequency offset in a orthogonal frequency division multiplexing communication system**

(57)      An apparatus and method for estimating and correcting an uplink frequency offset in an OFDM communication system are provided. A subscriber station (SS) once repeats an OFDM symbol including a ranging code allocated from a BS and transmits the repeated OFDM symbols to the base station (BS). The BS demodulates the two successive OFDM symbols received from the SS using the ranging code, sums the demodulated signal for each FFT window, and estimates the uplink frequency offset by multiplying the complex conjugate of a sum for a first FFT window by a sum for a second FFT window by the base station. The BS transmits a message including information about the frequency offset estimate to the SS. The SS then corrects the uplink frequency offset using the frequency offset information.

FIG.1

Printed by Jouve, 75001 PARIS (FR)

EP 1 648 129 A2

**Description**

**PRIORITY**

This application claims priority under 35 U.S.C. § 119 to an application entitled "Apparatus And Method For Estimating Uplink Frequency Offset In An Orthogonal Frequency Division Multiplexing Communication System" filed in the Korean Intellectual Property Office on October 15, 2004 and allocated Serial No. 2004-82790, the contents of which are incorporated herein by reference.

**BACKGROUND OF THE INVENTION**

1. Field of the Invention

The present invention relates generally to an Orthogonal Frequency Division Multiplexing (OFDM) communication system, and in particular, to an apparatus and method for estimating an uplink frequency offset using a ranging channel.

2. Description of the Related Art

In recent years, extensive research has been conducted to provide diverse services at or above 100Mbps in a 4th generation (4G) wireless communication system. To provide high-speed services, many techniques are required especially in the physical layer or its upper layers. The physical layer adopts multiplexing as a technology for dividing one circuit (a pair of a transmitter and a receiver in wireless communications) to establish a plurality of communication paths (hereinafter referred to as "channels") to enable simultaneous transmission/reception of independent signals, for high-speed data transmission. Classic multiplexing schemes are Frequency Division Multiplexing (FDM) and Time Division Multiplexing (TDM). In the case of FDM for high-speed data transmission, OFDM has been applied in the multiplexing operation in the physical layer in the 4G wireless communication system.

OFDM is a special case of Multi-Carrier Modulation (MCM) in which prior to transmission a serial symbol sequence is converted to parallel symbol sequences and modulated to mutually orthogonal subcarriers.

The first MCM systems appeared in the late 1950's for military High Frequency (HF) radio communications, and OFDM with overlapping orthogonal subcarriers was initially developed in the 1970's. OFDM has limitations in applications to real systems due to the difficulty in maintaining orthogonal modulation between multiple carriers.

However, in 1971, Weinstein, et al, proposed an OFDM scheme that applies Discrete Fourier Transform (DFT) to parallel data transmission as an efficient modulation/demodulation process, which was a driving force behind the development of OFDM. Although hardware complexity was an obstacle to the widespread use of OFDM, recent advances in digital signal processing technology including Fast Fourier Transform (FFT) and Inverse Fast Fourier Transform (IFFT) have enabled OFDM implementation. Also, the introduction of a guard interval and a cyclic prefix (CP) as a specific guard interval further mitigated adverse effects of multipath propagation and delay spread.

Due to its feasibility for high-speed data transmission, OFDM was adopted as a standard for fast Wireless Local Area Network (WLAN) based on IEEE 802.11a and HIPERLAN/2, IEEE 802.16 Broadband Wireless Access (BWA), and Digital Audio Broadcasting (DAB) in the field of wireless communications, and as a standard for Asymmetric Digital Subscriber Line (ADSL) and Very high-data rate Digital Subscriber Line (VDSL).

Frequency offset significantly affects the performance of the OFDM communication system and many studies have been made to tackle this problem. However, most of the studies were made under a downlink situation where a subscriber station (SS) receives and processes a signal broadcast by a base station (BS). Frequency offset estimation and compensation under an uplink situation is yet to be studied.

Compared to the downlink, signals from multiple users are received in combination on the uplink. Therefore, it is impossible to apply the existing frequency offset estimation and compensation techniques proposed under the downlink situation directly to the uplink. In this context, there was a theoretical approach in which a near-downlink environment is set by allocating different frequency bands to different users and separating individual signals from the users by means of filters for the respective frequency bands and the existing downlink frequency offset estimation method is applied under the near-downlink situation. However, this approach is not practically viable because it requires as many filters as the number of the users, for fine discrimination among the frequency bands.

In the OFDM communication system, the BS estimates an uplink time offset using a ranging channel signal received from an SS. The ranging channel was designed basically to estimate a time offset for each SS on the uplink and correct its transmission timing. Even though a frequency offset is not corrected, the time offset can be estimated relatively accurately using the ranging channel.

**SUMMARY OF THE INVENTION**

As described above, there are no traditional techniques for estimating uplink frequency offsets. Because additional allocation of resources for frequency offset estimation is unrealistic, the ranging channel used for uplink time synchronization can presently be exploited.

An object of the present invention is to substantially solve at least the above problems and/or disadvantages and to provide at least the advantages below. Accordingly, an object of the present invention is to provide an apparatus and method for estimating and correcting an uplink frequency offset using a ranging channel in an OFDM communication system.

Another object of the present invention is to provide an apparatus and method for transmitting/receiving a ranging signal used for frequency offset estimation in an FDM communication system.

The above objects are achieved by providing an apparatus and method for estimating and correcting an uplink frequency offset in an OFDM communication system.

According to one aspect of the present invention, in a BS device of an OFDM communication system where an uplink frequency offset is estimated using a ranging signal formed with two identical OFDM symbols, an FFT processor FIT-processes each of two successive OFDM symbols of a ranging signal received from an SS. A code demodulator multiplies the FFT signal received from the FFT processor by a ranging code allocated to the SS. A summer sums the signal received from the code demodulator for each FFT window. A multiplier multiplies the complex conjugate of a sum for a first FFT window received from the summer by a sum for a second FFT window received from the summer. A frequency offset estimator estimates an uplink frequency offset for the subscriber station using the product received from the multiplier.

According to another aspect of the present invention, in an SS device of an OFDM communication system, a ranging code generator generates a ranging code allocated for frequency offset estimation from a BS. A ranging channel generator allocates the ranging code to predetermined subcarriers. An IFFT processor IFFT-processes data received from the ranging channel generator and outputs time-domain sample data. A repeater once repeats the sample data received from the IFFT processor and successively outputs the repeated sample data. A guard interval adder generates a ranging signal for frequency offset estimation by adding guard intervals before and after the sample data received from the repeater.

According to a further aspect of the present invention, in an uplink frequency offset estimation method in a base station of an OFDM communication system where an uplink frequency offset is estimated using a ranging signal formed with two identical OFDM symbols, each of two successive OFDM symbols of a ranging signal received from an SS is FFT-processed. The FFT signal is code-demodulated by multiplying the FFT signal by a ranging code allocated to the SS and summed for each FFT window. The complex conjugate of a sum for a first FFT window is multiplied by a sum for a second FFT window. An uplink frequency offset for the SS is estimated using the product.

According to still another aspect of the present invention, in an uplink frequency offset correction method in an SS of an OFDM communication system, a ranging code is allocated from a base station. Time-domain sample data is generated by IFFT-processing the ranging code. A ranging signal for frequency offset estimation is generated by once repeating the sample data, processed to an RF signal, and transmitted to the BS.

**BRIEF DESCRIPTION OF THE DRAWINGS**

The above and other objects, features and advantages of the present invention will become more apparent from the following detailed description when taken in conjunction with the accompanying drawings in which:

FIG 1 illustrates an overall procedure for uplink frequency offset estimation in an OFDM communication system according to an embodiment of the present invention;
FIGs. 2A and 2B illustrate the configuration of a secondary ranging signal according to an embodiment of the present invention;
FIG 3 is a block diagram of a secondary ranging signal transmitter in the OFDM system according to an embodiment of the present invention;
FIG 4 is a block diagram of an uplink frequency offset estimator in a BS in the OFDM communication system according to an embodiment of the present invention;
FIG 5 is a block diagram of a frequency offset corrector in an SS in the OFDM communication system according to an embodiment of the present invention;
FIG 6 is a flowchart illustrating an operation in the SS for correcting a frequency offset in the OFDM communication system according to an embodiment of the present invention; and
FIG. 7 is a flowchart illustrating an operation in the BS for estimating an uplink frequency offset in the OFDM communication system according to an embodiment of the present invention.

**DETAILED DESCRIPTION OF THE PREFERRED EMBODIMENTS**

Preferred embodiments of the present invention will be described herein below with reference to the accompanying drawings. In the following description, well-known functions or constructions are not described in detail since they would obscure the invention in unnecessary detail.

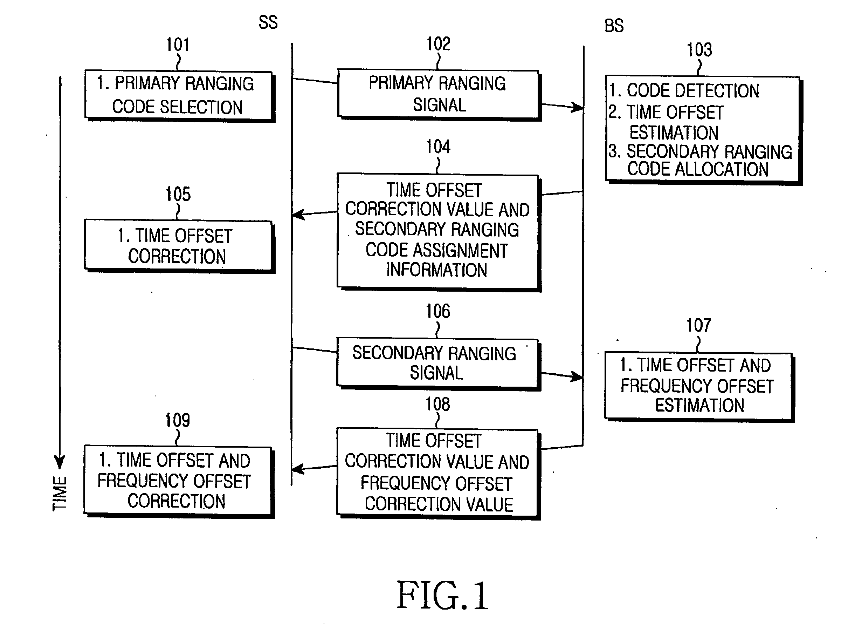

FIG. 1 illustrates an overall procedure for uplink frequency offset estimation in an OFDM communication system according to an embodiment of the present invention.

Referring to FIG 1, an SS randomly selects a ranging code from a primary ranging code set in step 101 and transmits a primary ranging signal using the selected ranging code in step 102. The primary ranging code set is a code set defined for initial ranging and periodical ranging. Frequency offset estimation can be carried out during initial ranging and periodical ranging in accordance with the present invention.

In step 103, a BS monitors the ranging channel, estimates a time offset upon detection of a primary ranging code, selects a secondary ranging code from a secondary ranging code set, and allocates the selected secondary ranging code to the SS corresponding to the detected primary ranging code. The BS then feeds back a time offset correction value and the allocated secondary ranging code to the SS in step 104.

The SS corrects its transmission timing based on the time offset correction value in step 105 and transmits a secondary ranging signal using the allocated secondary ranging code in step 106.

In step 107, the BS monitors the ranging channel. Upon detection of the secondary ranging code, the BS estimates a frequency offset using an algorithm of the present invention. The BS then feeds back a frequency offset correction value to the SS together with another time offset correction value in step 108.

The SS makes a fine correction to the transmission timing based on the time offset correction value and corrects its frequency offset based on the frequency offset correction value.

One thing to note in the procedure depicted in FIG. 1 is that the BS has only to determine whether the secondary ranging code allocated in step 103 has been received without determining which ranging code is received, in step 107. To the contrary, the BS must decide as to code reception over all possible primary ranging codes. Time offset estimation algorithms for steps 103 and 107 are known and thus their description is not provided herein.

A frequency offset is estimation process according to the present invention will now be described.

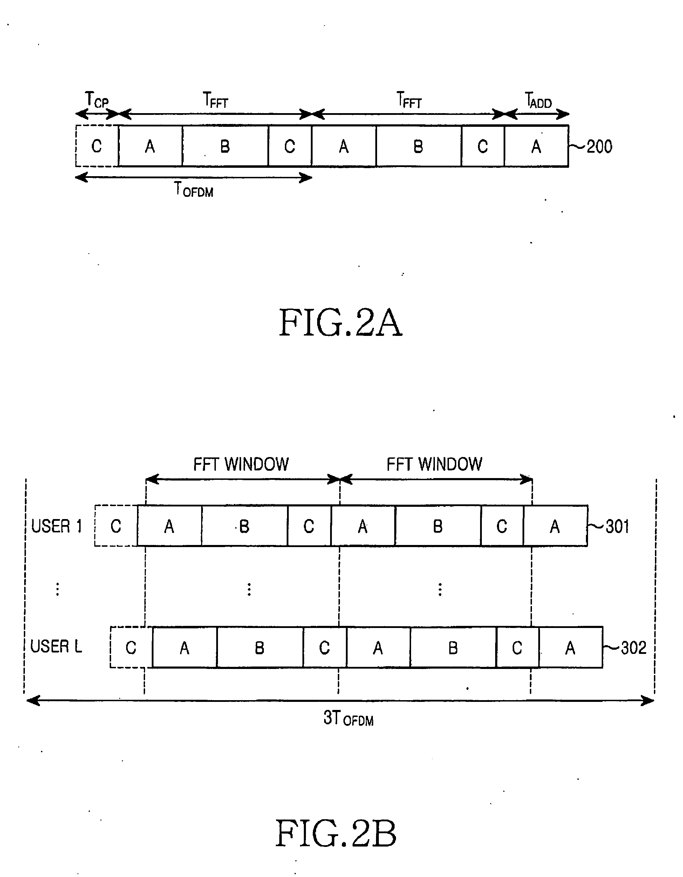

FIGs. 2A and 2B illustrate the configuration of a secondary ranging signal according to an embodiment of the present invention.

FIG 2A illustrates the transmission of the secondary ranging signal. Referring to FIG. 2A, $T_{FFT}$ denotes an effective OFDM symbol period, $T_{CP}$ denotes a guard interval, and $T_{ADD}$ denotes another guard interval. and $T_{OFDM}$ denotes an OFDM symbol period. An IFFT signal of the ranging channel to which a secondary ranging code is allocated corresponds to $T_{FFT}$. The secondary ranging signal is created by once repeating the $T_{FFT}$ period, attaching a copy $T_{CP}$ of a predetermined last part C of the $T_{FFT}$ period at the start, and attaching a copy $T_{ADD}$ of a predetermined first part A of the $T_{FFT}$ period at the end. $T_{CP}$ is an ordinary guard interval added to prevent Inter-Carrier Interference (ICI) in the case where the secondary ranging signal is received beyond an FFT window. Similarly to $T_{CP}$, $T_{ADD}$ is added to prevent ICI in the case where the secondary ranging signal is received before the FFT window.

In accordance with the present invention, the secondary ranging signal is characteristically created by once repeating an IFFT signal and adding guard intervals before and after the repeated IFFT signals.

FIG. 2B illustrates a simultaneous reception at the BS of secondary ranging signals from a plurality of SSs. Referring to FIG. 2B, the BS allocates three $T_{OFDM}$ periods to receive the secondary ranging signals transmitted in the format illustrated in FIG. 2A. The BS reads signals over two $T_{FFT}$ periods a predetermined time after the start of the allocated periods, FFT-processes the read signals, and estimates frequency offsets. The predetermined time is equal to a time delay involved in steps 104 and 106.

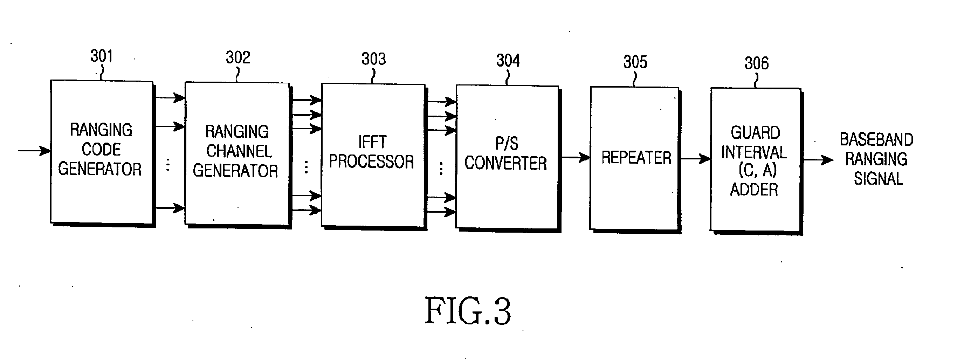

FIG 3 is a block diagram of a secondary ranging signal transmitter in the OFDM system according to an embodiment of the present invention.

The secondary ranging signal transmitter of the present invention includes a ranging code generator 301, a ranging channel generator 302, an IFFT processor 303, a parallel-to-serial (P/S) converter 304, a repeater 305, and a guard interval (C, A) adder 306.

Referring to FIG 3, upon receipt of the number of a secondary ranging code allocated by the BS from an upper-layer controller (not shown), the ranging code generator 301 outputs the secondary ranging code corresponding to the code number. The ranging channel generator 302 allocates the secondary ranging code to subcarriers. The subcarrier allocation amounts to providing the respective elements (or bits) of the ranging code to corresponding inputs (subcarrier positions) of the IFFT processor 303. 0s are padded at subcarrier positions to which the ranging code is not allocated.

The IFFT processor 303 IFFT-processes the signal from the ranging channel generator 302, thereby producing time-domain sample data. The P/S converter 304 converts the parallel IFFT signals to serial IFFT signal. The repeater 305 once repeats the IFFT signal and the guard interval adder 306 adds guard intervals C and A at the start and end of the two repeated IFFT signals and outputs the resulting baseband secondary ranging signal. While not shown, the baseband secondary ranging signal is processed to a Radio Frequency (RF) signal suitable for transmission over the air and then transmitted over the air through an antenna.

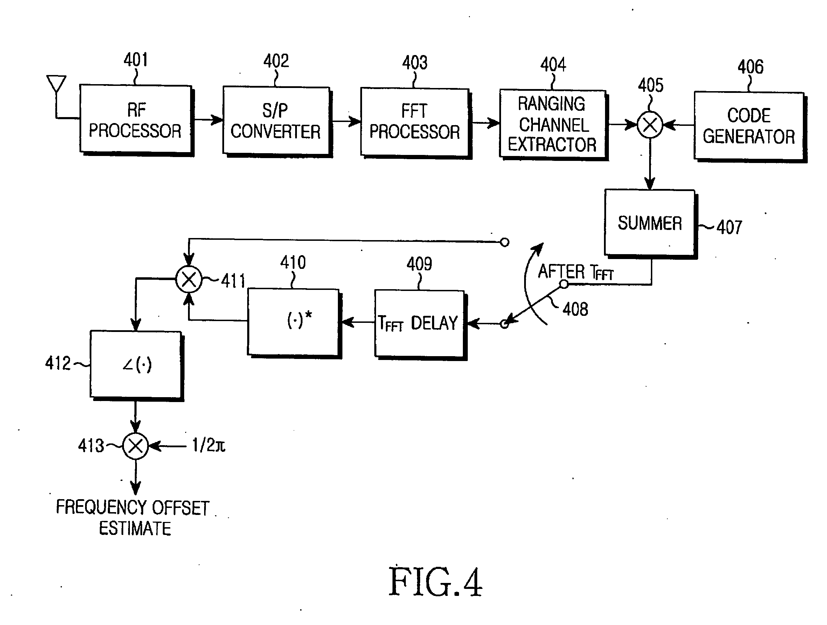

FIG. 4 is a block diagram of an uplink frequency offset estimator in the BS in the OFDM communication system according to an embodiment of the present invention. The frequency offset estimator is designed to receive the above-described secondary ranging signal and estimate a frequency offset using the secondary ranging signal.

The uplink frequency offset estimator of the present invention includes an RF processor 401, a serial-to-parallel (S/P) converter 402, an FFT processor 403, a ranging channel extractor 404, a multiplier 405, a code generator 406, a summer 407, a switch 408, a delay 409, a complex conjugate generator 410, a multiplier 411, a phase calculator 412, and a multiplier 413.

Referring to FIG 4, the RF processor 401 includes a front-end unit, a filter, an analog-to-digital (A/D) converter, etc. The RF processor 401 downconverts an RF signal received through an antenna into a baseband signal and converts the analog baseband signal into digital sample data. The S/P converter 402 converts the serial data received from the RF processor 401 into parallel data for input to the FFT processor 403. During the S/P conversion, the S/P converter402 eliminates the guard intervals C and A illustrated in FIGs. 2A and 2B from the serial data.

The FFT processor 403 FFT-processes the time-domain sample data received from the S/P converter 402 and outputs frequency-domain data. That is, the FFT processor 403 generates subcarrier values by demodulating the received signal. The ranging channel extractor 404 extracts subcarrier values on which a ranging code is loaded among the subcarrier values received from the FFT processor 403. As described with reference to FIG 3, since the secondary ranging signal includes two successive OFDM symbols, the FFT processor 403 demodulates the secondary ranging signal over two successive FFT windows. The output of the ranging channel extractor 404 with respect to the first FFT window is modeled as Equation (1):

$$\sum_{l=1}^{L} \left( H_l(k) X_l(k) + N^{(1)}(k) \right), \quad k \in RACH$$

$$\cdots\cdots(1)$$

and the output of the ranging channel extractor 404 with respect to the second FFT window is modeled as Equation (2):

$$\sum_{l=1}^{L} \left( H_l(k) X_l(k) \exp(j2\pi k_l) + N^{(2)}(k) \right), \quad k \in RACH$$

$$\cdots\cdots(2)$$

where $k$ is a subcarrier index, $l$ is a user index, and the number of users is $L$. $H_l(k)$ denotes the channel of subcarrier $k$ for user $l$, $X_l(k)$ denotes the ranging code component of subcarrier $k$ for user $l$ and $k_l$ denotes a frequency offset normalized to a real subcarrier spacing for user $l$. $N^{(1)}(k)$ and $N^{(2)}(k)$ are noise elements on subcarrier $k$ in the first and second FFT windows illustrated in FIG. 2, and $RACH$ is a set of subcarrier indexes allocated to the ranging channel.

The code generator 406 generates a secondary ranging code for a user that requires frequency offset estimation. For notational simplicity, it is assumed that a frequency offset is estimated for user 1 ($l$=1). In other words, the output of the code generator 406 is assumed to be $X_1(k)$, $k \in RACH$. The multiplier 405 multiplies the subcarrier values received from the ranging channel extractor 404 by the secondary ranging code.

The summer 407 sums the product signals in each FFT window. The output of the summer 407 over the first FFT window is modeled as Equation (3):

$$\sum_{k \in RACH} H_1(k) + \sum_{l=2}^{L} \sum_{k \in RACH} H_1(k) X_1(k) X_l(k) + \sum_{k \in RACH} X_1(k) N^{(1)}(k)$$

$$\cdots\cdots(3)$$

and the output of the summer 407 over the second FFT window is modeled as Equation (4):

$$\sum_{k \in RACH} H_1(k) \exp(j2\pi k_1)$$

$$+ \sum_{l=2}^{L} \sum_{k \in RACH} H_1(k) X_1(k) X_l(k) \exp(j2\pi k_l) + \sum_{k \in RACH} X_1(k) N^{(2)}(k)$$

$$\ldots \ldots (4)$$

In Equation (3) and Equation (4), the second terms have near-zero values because the secondary ranging code of user 1 ($l=1$) is different from that of any other user. Without time synchronization, the second terms are not zeroes and thus time synchronization must precede the frequency offset estimation. It is to be noted here that the third terms still serve as noise elements. Therefore, $\exp(j2\pi k_l)$ can be extracted by complex-conjugating the signal described by Equation (3) and multiplying the complex conjugate by the signal described by Equation (4).

Thus, the switch 408 switches a first output of the summer 407 (hereinafter, referred to as "first FFT value") to the delay 409. A predetermined time (i.e. $T_{FFT}$) later, the switch 406 switches a second output of the summer 407 (hereinafter, referred to as "second FFT value") to the multiplier 411. In the mean time, the delay 409 delays the first FFT value by the predetermined time (i.e. $T_{FFT}$). The complex conjugate generator 410 complex-conjugates the delayed first FFT value.

The multiplier 411 multiplies the second FFT value received from the switch 408 by the complex conjugate. The resulting product is a multiple of $\exp(j2\pi k_1)$ with added noise. The phase calculator 412 calculates the phase $2\pi k_1$ from the product. The multiplier 413 computes a frequency offset estimate $k_1$ by multiplying the phase $2\pi k_1$ by $\frac{1}{2}\pi$. The frequency offset estimate is fed back together with a time offset estimate to the user (or SS), and the SS corrects the time offset and the frequency offset based on the time offset estimate and the frequency offset estimate, for signal transmission.

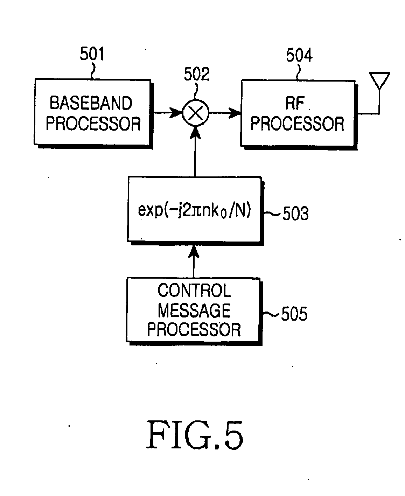

FIG. 5 is a block diagram of a frequency offset corrector in the SS in the OFDM communication system according to an embodiment of the present invention.

The frequency offset corrector of the present invention includes a baseband processor 501, a multiplier 502, a frequency offset correction value generator 503, an RF processor 504, and a control message processor 505.

Referring to FIG 5, the control message processor 505 processes a control message received from the BS and provides a frequency offset correction value to the frequency offset correction value generator 503. The received control message is assumed to include frequency offset information and time offset information according to the present invention.

The frequency offset correction value generator 503 generates a phase rotation value $\exp(-j2\pi n k_0/N)$ according to the frequency offset correction value. N is the FFT size, n is the time index of an IFFT output, and $k_0$ is the frequency offset correction value for the user. The multiplier 502 multiplies time sample data received from the baseband processor 501 by the phase rotation value. The RF processor 504 converts the phase-adjusted sample data to an analog signal, processes the analog signal to an RF signal suitable for actual transmission, and transmits the RF signal through the antenna.

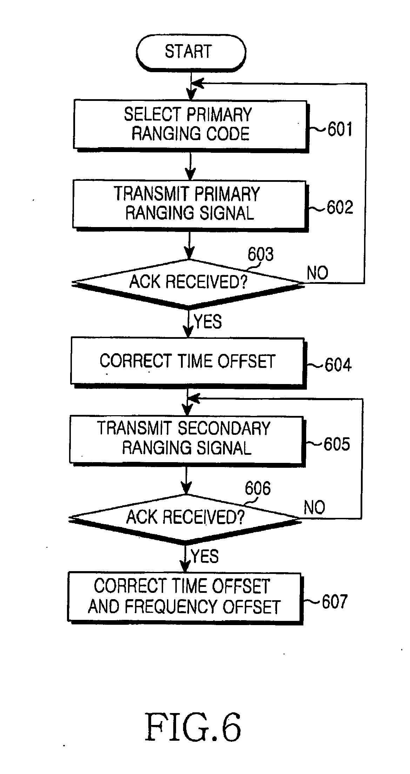

FIG. 6 is a flowchart illustrating a frequency offset correction operation of the SS in the OFDM communication system according to an embodiment of the present invention.

Referring to FIG. 6, the SS selects a random primary ranging code from a primary ranging code set in step 601. The primary ranging code set is a code set defined for initial ranging and periodical ranging. That is, frequency offset estimation can be carried out during initial ranging and periodical ranging in accordance with the present invention. The SS transmits a primary ranging signal using the selected primary ranging code to the BS in step 602.

In step 603, the SS monitors for a reception of an ACKnowledgement (ACK) signal from the BS for a predetermined time. If the ACK signal is not received, the SS returns to step 601. On the other hand, upon receipt of the ACK signal, the SS acquires time offset information from the ACK message and corrects a time offset based on the time offset information in step 604.

The SS also acquires a secondary ranging code from the ACK message and transmits a secondary ranging signal using the secondary ranging code to the BS in step 605. As described earlier, the secondary ranging signal has two successive OFDM symbols. That is, an OFDM symbol is generated using the secondary ranging code and then once repeated, resulting in the secondary ranging signal.

After transmitting the secondary ranging signal, the SS monitors for a reception of an ACK signal for the secondary ranging signal from the BS in step 606. Upon receipt of the ACK message, the SS acquires frequency offset information and time offset information from the ACK message and corrects a frequency offset and the time offset based on the acquired information in step 607.

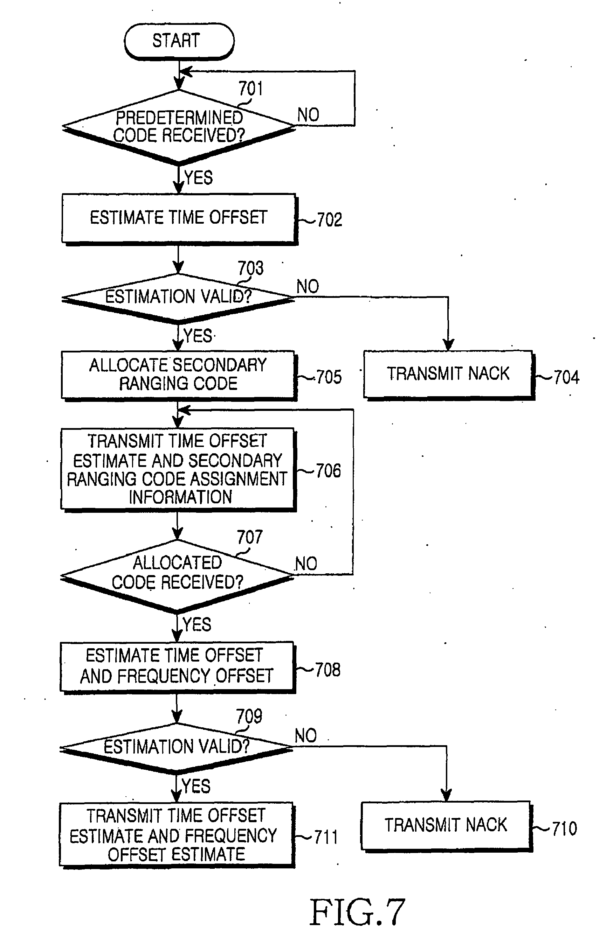

FIG. 7 is a flowchart illustrating an uplink frequency offset estimation operation of the BS in the OFDM communication system according to an embodiment of the present invention.

Referring to FIG. 7, the BS monitors reception of all possible primary ranging codes in step 701. If a primary ranging code is received, the BS estimates the time offset of the detected ranging signal in step 702. Since many algorithms are known regarding the time offset estimation, the time offset estimation will not be described further. In step 703, the BS determines if the time offset estimate is valid. A criterion for the determination is different depending on the estimation algorithm used and its detailed description is not provided herein. If the time offset estimate is not valid, the BS transmits a Negative ACKnowledgement (NACK) signal to the SS corresponding to the detected ranging code in step 704.

If the time offset estimate is valid, the BS selects a random secondary ranging code from a secondary ranging code set in step 705 and transmits to the SS a message containing the time offset estimate and secondary ranging code assignment information in step 706.

In step 707, the BS monitors reception of a secondary ranging signal using the secondary ranging code. Upon receipt of the secondary ranging signal, the BS estimates the time offset and frequency offset of the secondary ranging signal in step 708. As described before, code-demodulated signals are summed for each FFT period, the sum for a first FFT period is complex-conjugated, and the complex conjugate is multiplied by the sum for a second FFT period. Thus, the frequency offset is estimated.

After estimating the time offset and the frequency offset, the BS determines if the estimates are valid in step 709. If the estimates are not valid, the BS transmits a NACK signal to the SS in step 710. If the estimates are valid, the BS transmits a message containing the time offset estimate and the frequency offset estimate to the SS in step 711.

As described above, the present invention provides a solution to frequency offset estimation and correction on the uplink in the OFDM communication system. The frequency offset estimation scheme of the present invention is advantageous in the utilization of the frequency resources because an existing ranging channel allocated for time offset estimation is used without allocating additional frequency resources for frequency offset estimation.

While the invention has been shown and described with reference to certain preferred embodiments thereof, it will be understood by those skilled in the art that various changes in form and details may be made therein without departing from the spirit and scope of the invention as defined by the appended claims.

## Claims

1. A base station device in an orthogonal frequency division multiplexing (OFDM) communication system where an uplink frequency offset is estimated using a ranging signal formed with two OFDM symbols, comprising:

   a fast Fourier transform (FFT) processor for FFT-processing each of two OFDM symbols of a ranging signal received from a subscriber station;
   a code demodulator for multiplying the FFT signal received from the FFT processor by a ranging code allocated to the subscriber station;
   a summer for summing the signal received from the code demodulator for each FFT window;
   a multiplier for multiplying the complex conjugate of a sum for a first FFT window received from the summer by a sum for a second FFT window received from the summer; and
   a frequency offset estimator for estimating an uplink frequency offset for the subscriber station using the product received from the multiplier.

2. The base station device of claim 1, wherein the code demodulator comprises:

   a ranging channel extractor for extracting subcarrier values having the ranging signal from the FFT signal; and
   a multiplier for multiplying the subcarrier values by the ranging code allocated to the subscriber station.

3. The base station device of claim 1, wherein a product received from the multiplier is approximated to a multiple of $\exp(j2\pi k_l)$ where $k_l$ is a frequency offset normalized to a subcarrier spacing for user $l$.

4. The base station device of claim 3, wherein the frequency offset estimator comprises:

   a phase calculator for calculating a phase value using the product received from the multiplier; and
   a multiplier for calculating a frequency offset estimate by multiplying the phase value by $1/2\pi$.

5. The base station device of claim 1, wherein the ranging signal is generated by once repeating an inverse fast Fourier transform (IFFT) signal of the ranging code and adding guard intervals before and after the repeated signals.

**6.** A subscriber station device in an orthogonal frequency division multiplexing (OFDM) communication system, comprising:

a ranging code generator for generating a ranging code allocated for frequency offset estimation from a base station;
a ranging channel generator for allocating the ranging code to subcarriers;
an inverse fast Fourier transform (IFFT) processor for IFFT-processing data received from the ranging channel generator and outputting time-domain sample data;
a repeater for once repeating the sample data received from the IFFT processor and outputting the repeated sample data; and
a guard interval adder for generating a ranging signal for frequency offset estimation by adding guard intervals before and after the sample data received from the repeater.

**7.** The subscriber station device of claim 6, further comprising:

a control message processor for acquiring frequency offset information by processing a control message received from the base station, after transmitting the ranging signal for frequency offset estimation;
a frequency offset correction value generator for generating a phase rotation value according to the frequency offset information;
a multiplier for correcting a frequency offset by time-domain sample data by the phase rotation value; and
a radio frequency (RF) processor for processing sample data received from the multiplier to an RF signal and transmitting the RF signal through an antenna.

**8.** An uplink frequency offset estimation method in a base station in an orthogonal frequency division multiplexing (OFDM) communication system where an uplink frequency offset is estimated using a ranging signal formed with two OFDM symbols, comprising the steps of:

fast Fourier transform (FFT)-processing each of two OFDM symbols of a ranging signal received from a subscriber station;
code-modulating the FFT signal by multiplying the FFT signal by a ranging code allocated to the subscriber station;
summing the code-demodulated signal for each FFT window;
multiplying the complex conjugate of a sum for a first FFT window by a sum for a second FFT window; and
estimating an uplink frequency offset for the subscriber station using a product of the multiplication.

**9.** The uplink frequency offset estimation method of claim 8, wherein the code demodulation step comprises the steps of:

extracting subcarrier values having the ranging signal from the FFT signal; and
multiplying the subcarrier values by the ranging code allocated to the subscriber station.

**10.** The uplink frequency offset estimation method of claim 8, wherein the product is approximated to a multiple of $exp\ (j2\pi k_l)$ where $k_l$ is a frequency offset normalized to a subcarrier spacing for user l.

**11.** The uplink frequency offset estimation method of claim 10, wherein the frequency offset estimation step comprises the steps of:

calculating a phase value using the product; and
calculating a frequency offset estimate by multiplying the phase value by $1/2\pi$.

**12.** The uplink frequency offset estimation method of claim 8, wherein the ranging signal is generated by once repeating an inverse fast Fourier transform (IFFT) signal of the ranging code and adding guard intervals before and after the repeated signals.

**13.** An uplink frequency offset correction method in a subscriber station in an orthogonal frequency division multiplexing (OFDM) communication system, comprising the steps of:

receiving from a base station an allocated ranging code;

generating time-domain sample data by inverse fast Fourier transform (IFFT)-processing the ranging code;

generating a ranging signal for frequency offset estimation by once repeating the sample data; and

processing the ranging signal to a radio frequency (RF) signal and transmitting the RF signal to the base station.

14. The uplink frequency offset correction method of claim 13, further comprising the steps of:

acquiring uplink frequency offset information from a response message for the ranging signal, upon receipt of the response message; and

adjusting the phase of time-domain sample data using the uplink frequency offset information and transmitting the phase-adjusted data.

15. The uplink frequency offset correction method of claim 14, wherein the response message includes the uplink frequency offset information and uplink time offset information.

16. The uplink frequency offset correction method of claim 13, wherein the ranging signal generation step comprises the step of generating the ranging signal for frequency offset estimation by once repeating the generated sample data and adding guard intervals before and after the repeated sample data.

17. The uplink frequency offset correction method of claim 13, wherein the ranging code receiving step comprises the step of receiving ranging code assignment information by a response message for initial ranging and periodic ranging.

18. A method of correcting an uplink frequency offset in an orthogonal frequency division multiplexing (OFDM) communication system, comprising the steps of:

once repeating an OFDM symbol including a ranging code and transmitting by a subscriber station the repeated OFDM symbols to the base station;

demodulating the two OFDM symbols received from the subscriber station using the ranging code, summing the demodulated signal for each fast Fourier transform (FFT) window, and estimating the uplink frequency offset by multiplying the complex conjugate of a sum for a first FFT window by a sum for a second FFT window by the base station;

transmitting by the base station a message including information about the frequency offset estimate to the subscriber station; and

correcting by the subscriber station the uplink frequency offset using the frequency offset information.

19. The method of claim 18, wherein the message includes the frequency offset information and uplink time offset information.

20. The method of claim 18, further comprising the step of receiving by the subscriber station ranging code assignment information by a response message for initial ranging and periodic ranging.

21. A device for estimating an uplink frequency offset using a frequency offset estimation signal formed with two orthogonal frequency division multiplexing (OFDM) symbols, comprising:

a fast Fourier transform (FFT) processor for FFT-processing each of two OFDM symbols of a ranging signal received from the other station;

a summer for summing subcarrier values received from the FFT processor for each FFT window;

a multiplier for multiplying the complex conjugate of a sum for a first FFT window received from the summer by a sum for a second FFT window received from the summer; and

a frequency offset estimator for estimating an uplink frequency offset for the other station using the product received from the multiplier.

22. The device of claim 21, wherein a product received from the multiplier is approximated to a multiple of $\exp(j2\pi k_l)$ where $k_l$ is a frequency offset normalized to a subcarrier spacing for user $l$.

23. The device of claim 22, wherein the frequency offset estimator comprises:

a phase calculator for calculating a phase value using the product received from the multiplier; and

a multiplier for calculating a frequency offset estimate by multiplying the phase value by ½π.

**24.** The device of claim 22, wherein the frequency offset estimation signal is generated by once repeating an inverse fast Fourier transform (IFFT) signal of a predetermined sequence and adding guard intervals before and after the repeated signals.

101

┌─────────────────────┐
│ 1. PRIMARY RANGING  │
│    CODE SELECTION   │
└─────────────────────┘

102

┌─────────────────────┐
│  PRIMARY RANGING    │
│     SIGNAL          │
└─────────────────────┘

103

┌─────────────────────┐
│ 1. CODE DETECTION   │
│ 2. TIME OFFSET      │
│    ESTIMATION       │
│ 3. SECONDARY RANGING│
│    CODE ALLOCATION  │
└─────────────────────┘

104

┌─────────────────────┐
│  TIME OFFSET        │
│  CORRECTION VALUE AND│
│  SECONDARY RANGING  │
│  CODE ASSIGNMENT    │
│  INFORMATION        │
└─────────────────────┘

105

┌─────────────────────┐
│ 1. TIME OFFSET      │
│    CORRECTION       │
└─────────────────────┘

106

┌─────────────────────┐
│  SECONDARY RANGING  │
│     SIGNAL          │
└─────────────────────┘

107

┌─────────────────────┐
│ 1. TIME OFFSET AND  │
│ FREQUENCY OFFSET    │
│ ESTIMATION          │
└─────────────────────┘

108

┌─────────────────────┐
│  TIME OFFSET        │
│  CORRECTION VALUE AND│
│  FREQUENCY OFFSET   │
│  CORRECTION VALUE   │
└─────────────────────┘

109

┌─────────────────────┐
│ 1. TIME OFFSET AND  │
│ FREQUENCY OFFSET    │
│ CORRECTION          │
└─────────────────────┘

TIME

FIG.1

EP 1 648 129 A2

$T_{CP}$  $T_{FFT}$  $T_{FFT}$  $T_{ADD}$

| C | A | B | C | A | B | C | A | ~200 |

$T_{OFDM}$

# FIG.2A

FFT WINDOW  FFT WINDOW

USER 1 | C | A | B | C | A | B | C | A | ~301

⋮  ⋮  ⋮

USER L | C | A | B | C | A | B | C | A | ~302

$3T_{OFDM}$

# FIG.2B

FIG.3

FIG.4

EP 1 648 129 A2

501

BASEBAND
PROCESSOR

502

504

RF
PROCESSOR

$\exp(-j2\pi nk_0/N)$ ~503

CONTROL
MESSAGE
PROCESSOR ~505

# FIG.5

START

SELECT PRIMARY
RANGING CODE  ~601

TRANSMIT PRIMARY
RANGING SIGNAL  ~602

603
ACK RECEIVED?  NO

YES

CORRECT TIME OFFSET  ~604

TRANSMIT SECONDARY
RANGING SIGNAL  ~605

606
ACK RECEIVED?  NO

YES

CORRECT TIME OFFSET
AND FREQUENCY OFFSET  ~607

FIG.6

START

**701**
PREDETERMINED CODE RECEIVED? — NO

↓ YES

ESTIMATE TIME OFFSET ~702

**703**
ESTIMATION VALID? — NO

↓ YES

ALLOCATE SECONDARY RANGING CODE ~705

TRANSMIT NACK ~704

TRANSMIT TIME OFFSET ESTIMATE AND SECONDARY RANGING CODE ASSIGNMENT INFORMATION ~706

**707**
ALLOCATED CODE RECEIVED? — NO

↓ YES

ESTIMATE TIME OFFSET AND FREQUENCY OFFSET ~708

**709**
ESTIMATION VALID? — NO

↓ YES

TRANSMIT TIME OFFSET ESTIMATE AND FREQUENCY OFFSET ESTIMATE ~711

TRANSMIT NACK ~710

FIG.7